(19) Europäisches Patentamt
European Patent Office
Office européen des brevets

(11) EP 1 994 403 B1

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(21) Anmeldenummer: **06805440.2**

(22) Anmeldetag: **17.10.2006**

(51) Int Cl.:
*G01N 30/20* (2006.01)    *G01N 30/86* (2006.01)

(86) Internationale Anmeldenummer:
**PCT/DE2006/001834**

(87) Internationale Veröffentlichungsnummer:
**WO 2007/045224 (26.04.2007 Gazette 2007/17)**

(54) **ANALYSE VON STOFFGEMISCHEN**

ANALYSIS OF SUBSTANCE MIXTURES

ANALYSE DE MELANGES DE SUBSTANCES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.10.2005 DE 102005050114**

(43) Veröffentlichungstag der Anmeldung:
**26.11.2008 Patentblatt 2008/48**

(60) Teilanmeldung:
**08008888.3 / 2 037 262**
**08008889.1 / 2 042 863**

(73) Patentinhaber: **Studiengesellschaft Kohle mbH 45470 Mülheim an der Ruhr (DE)**

(72) Erfinder: **Die Erfindernennung liegt noch nicht vor**

(56) Entgegenhaltungen:
EP-A- 0 685 738    WO-A-01/51179
WO-A-02/39106    WO-A-03/067250
DE-A1- 2 514 340    DE-A1- 3 001 425
DE-A1- 10 133 774    DE-A1- 19 817 017
DE-A1- 19 949 551    GB-A- 1 150 266
GB-A- 2 268 096    US-A- 5 954 862

- LAURGEAU AND F BARRAS C ED - FELINGER ATTILA: "SIMULTANEOUS ANALYSIS OF TWO OR MORE SAMPLES ON THE SAME CHROMATOGRAPHIC COLUMN", CHROMATOGRAPHIA, VIEWEG UND TEUBNER VERLAG, DE, vol. 12, no. 3, 1 January 1979 (1979-01-01), pages 160-164, XP009078977, ISSN: 0009-5893, DOI: 10.1007/BF02314871
- SMIT H C: "CORRELATION CHROMATOGRAPHY", TRAC, TRENDS IN ANALYTICAL CHEMISTRY, ELSEVIER, AMSTERDAM, NL, vol. 2, no. 1, 1 January 1983 (1983-01-01) , pages 1-07, XP000744306, ISSN: 0165-9936, DOI: 10.1016/0165-9936(83)87065-4

**Beschreibung**

Die vorliegende Erfindung betrifft ein Verfahren zur Analyse von Stoffgemischen, insbesondere komplexen chemischen und/oder biochemischen Stoffgemischen, wobei ein zu analysierendes Stoffgemisch einer Trenneinrichtung zugeführt wird, durch chemisch und/oder physikalisch bewirkten Transport die Stoffe des zu analysierenden Stoffgemisches seitens der Trenneinrichtung voneinander getrennt werden und die voneinander getrennten Stoffe seitens einer Auswerteeinrichtung erfasst werden.

Ferner betrifft die vorliegende Erfindung Verfahren zur Erzeugung von gepulsten Stoffgemischen, insbesondere komplexen chemischen und/oder biochemischen Stoffgemischen, vorzugsweise zur Nutzung mit einer erfindungsgemäßen Analyse von Stoffgemischen, insbesondere komplexen chemischen und/oder biochemischen Stoffgemischen.

Im Stand der Technik sind verschiedene Verfahren und Vorrichtungen zur qualitativen und/oder quantitativen Analyse, also zur Bestimmung von Art und/oder Menge der Bestandteile eines Stoffgemisches bekannt, die chemische, physikalische und/oder biochemische Methoden und verschiedene Trenntechniken nutzen. Aus LAURGEAU et al:"Simultaneous Analysis of Two or More samples on the same Chromatographic Column", Chromatographia 12 (1979) 160-164 ist ein Verfahren zur Analyse zweier oder mehrerer Proben auf einer einzelnen Chromatographiesäule bekannt, bei dem binäre Pseudozufallssequenzen verwendet werden. Zur Identifikation und/oder Quantifizierung von chemischen Verbindungen in komplexen chemischen und/oder biochemischen zu analysierenden Stoffgemischen, insbesondere bei der Analyse komplexer chemischer Stoffgemische aus Hochdurchsatzverfahren, insbesondere aus parallelisierten chemischen Reaktoren oder der Untersuchung kombinatorischer Substanzbibliotheken, und/oder bei der Analyse von natürlichen Stoffen, Proteinen, Peptiden und/oder dergleichen biochemisch relevanten, beispielsweise bei einer sogenannten Genom-, Proteom-, Metabolom-, und/oder Transskriptomanalyse zu analysierenden Verbindungen, kommen insbesondere chromatographische oder elektrophoretische Trennverfahren und/oder -einrichtungen zum Einsatz, wobei die zu analysierenden Stoffgemische sequentiell und/oder parallel analysiert werden.

Die Trenneinrichtungen sind zur Analyse ferner in der Regel mit einer Auswerteeinrichtung zur Erfassung beziehungsweise Detektion der voneinander getrennten Stoffe des Stoffgemischs gekoppelt beziehungsweise verbunden. Seitens der Auswerteeinrichtungen beziehungsweise Detektoren kommen dabei insbesondere spektroskopische und/oder spektrometrische Detektionstechniken zum Einsatz, im Zusammenhang mit Genom-, Proteom-, Metabolom-, und/oder Transskriptomanalysen insbesondere spektroskopische Detektoren, beispielsweise bei der Kernresonanzspektroskopie (NMR) oder der Infrarotspektroskopie (IR), und massenspektrometrische (MS) Detektoren zum Einsatz.

Die bisher bekannten Verfahren und Vorrichtungen zur Analyse von Stoffgemischen, insbesondere komplexen chemischen und/oder biochemischen Stoffgemischen, weisen verschiedene Nachteile auf. So sind die bisher bekannten, insbesondere hochauflösende spektroskopische und/oder spektrometrische Techniken nutzenden Verfahren und Vorrichtungen bedingt durch große Analysendauern sowie geringen Detektionsempfindlichkeiten beziehungsweise schlechten Signal-zu-Rausch-Verhältnissen (SNRs) der zum Einsatz kommenden Auswerteeinrichtungen limitiert. In der Regel ist dabei eine Analyse von sehr geringen Stoffmengen bei der Erfassung des gesamten spektroskopischen oder spektrometrischen Bereichs eines zu analysierenden Stoffgemischs nicht möglich. Darüber hinaus ist der Durchsatz an zu analysierenden Stoffgemischen insbesondere aufgrund der bisher erforderlichen großen Analysedauern stark eingeschränkt. So erfordert beispielsweise die qualitative und quantitative Analyse der Edukte und Produkte eines 7-mal-7-Parallelreaktors etwa 24,5 h bei einer Analysendauer von jeweils etwa 30 min.

Der vorliegenden Erfindung liegt in Anbetracht dieses Standes der Technik die Aufgabe zugrunde, die Analyse von Stoffgemischen unter Meidung der beschriebenen Nachteile zu verbessern, insbesondere hinsichtlich Analysendauer, Durchsatz und Auflösung.

Zur technischen Lösung wird mit der vorliegenden Erfindung das Verfahren nach Anspruch 1 vorgeschlagen. Der Erfindung liegt die Erkenntnis zugrunde, dass durch Nutzung eines zu analysierenden Stoffgemischs mit Pulsen einer eindeutigen binären Sequenz, also aus einer beliebigen Folge von Nullen ("0") und Einsen ("1") bestehenden Sequenz, ein mit einer Kennung, insbesondere nach Art eines Strichcodes, versehenes zu analysierendes Stoffgemisch gegeben ist, so dass gleichzeitig unterschiedliche Stoffgemische - quasi nach Art eines Multiplexing-Verfahrens, ähnlich der US 2004/0144918 A1 für Anwendungen in der Spektroskopie (FT-NMR, FT-IR) und der Massenspektrometrie (FT-ICR-MS und HT-TOF-MS) - der Analyse zugeführt werden können, wodurch sich insbesondere die Analysendauer, der zu analysierende Stoffgemischdurchsatz und die Auflösung der analysierten Stoffe verbessern lassen. Erfindungsgemäß sind so vorteilhafterweise mehrere Stoffgemischanalysen durchführbar, wodurch insbesondere das Signal-zu-Rausch-Verhältnis (SNR) weiter verbessert wird.

Vorteilhafterweise werden die Pulse des zu analysierenden Stoffgemischs zeitlich und räumlich voneinander getrennt der Trenneinrichtung zugeführt.

In einer vorteilhaften Ausgestaltung der Erfindung wird die eindeutige binäre Sequenz aus einer mit einer wiederholenden Sequenz unterteilten, mit einem binären Zufallsgenerator erzeugten Sequenz gebildet. Durch diese erfindungsgemäßen Maßnahmen wird so eine sogenannte Pseudozufallssequenz erzeugt und vorteilhafterweise sichergestellt, dass sich Sequenz der Pulse des zu analysierenden Stoffgemischs nicht wiederholt. Insgesamt wird so die Eindeutigkeit der binären Pulssequenz verbessert.

Gemäß einem weiteren vorteilhaften Vorschlag der Erfindung besteht die eindeutige binäre Sequenz aus $2^n$ Elementen, mit $0 \leq n \leq \infty$ (zumindest theoretisch), vorzugsweise mit $5 \leq n \leq 128$, besonders bevorzugt mit $7 \leq n \leq 14$. Die Erfindung macht sich die Erkenntnis zu nutze, dass n Analysen in derselben Zeit wie eine konventionelle Analyse durchgeführt werden können. Dies hat zur Folge, dass das Signal-zu-Rausch-Verhältnis (SNR) verbessert werden kann in einem Bereich von $\sqrt{\dfrac{n}{2}} \geq SNR \geq \dfrac{\sqrt{n}}{2}$. Die maximal erreichbare Verbesserung des Signal-zu-Rausch-Verhältnis-ses (SNRs) beträgt dementsprechend $\sqrt{n}\big/2$. Je länger die verwendeten Pulssequenzen sind, desto größer wird der Vorteil beim Signal-zu-Rausch-Verhältnis (SNR), der sogenannte Felgett-Vorteil, und dementsprechend verbessert die Auflösung und die Eindeutigkeit der Zuordnung der Signale der von der Auswerteeinheit erfassten Stoffe. Die Erfindung ist gekennzeichnet durch ein Modulationsintervall mit einer Sequenz- beziehungsweise Pulsintervalldauer ($\Delta t$) in einem Bereich von etwa 1 s bis etwa 20 s und eine Pulsdauer ($\Delta t_{Puls}$) in einem Bereich von etwa 1 ms bis etwa 10 ms. Erfindungsgemäß sind so hochpräzise gepulste Sequenzen des zu analysierenden Stoffgemischs erzeugbar, die insbesondere zu einer weiteren Verbesserung des Durchsatzes und der Auflösung führen.

Vorteilhafterweise erfolgt die Stofferfassung der Auswerteeinrichtung synchronisiert mit der Stoffgemischzuführung. In einer bevorzugten Ausgestaltung der Erfindung wird die Auswerteeinrichtung mit einer Erfassungsdauer betrieben, die der Pulsintervalldauer ($\Delta t$) oder einem ganzzahligen Bruchteil der Pulsintervalldauer ($\Delta t$) entspricht. Dadurch ist vorteilhafterweise ein sogenanntes Oversampling der Pulssequenz realisierbar. Erfindungsgemäß können so vorteilhafterweise seitens der Auswerteeinrichtung zur Erfassung der Stoffe des zu analysierenden Stoffgemisches Detektoren eingesetzt werden, die im Vergleich zu der Pulsintervalldauer ($\Delta t$) mit geringeren Erfassungszeiten, das heißt insbesondere langsamer, betrieben werden. Erfindungsgemäß ist so vorteilhafterweise eine Erfassung von Stoffen des zu analysierenden Stoffgemisches im gesamten Detektionsbereich des Detektors der Auswerteeinrichtung ermöglicht.

Eine besonders vorteilhafte Ausgestaltung der Erfindung sieht vor, dass die seitens der Auswerteeinrichtung erfassten Stoffe mit der eindeutigen binären Sequenz der Pulse des zu analysierenden Stoffgemischs mathematisch dekonvoliert werden, vorzugsweise durch eine zweidimensionale mathematische Dekonvolution. Vorteilhafterweise werden im Rahmen der Dekonvolution die von der Auswerteeinrichtung erfassten Stoffe einer Hadamard-Transformation mit der eindeutigen binären Sequenz unterzogen, aus dem Ergebnis der Hadamard-Transformation die Konzentrationsverteilungen der von der Auswerteeinrichtung erfassten Stoffe bestimmt und die Konzentrationen der einzelnen von der Auswerteeinrichtung erfassten Stoffe bestimmt, vorzugsweise durch Lösung eines von den Konzentrationsverteilungen, den Konzentrationen der einzelnen von der Auswerteeinrichtung erfassten Stoffe und der von der Auswerteeinrichtung erfassten Stoffe gebildeten linearen Gleichungssystems nach den Konzentrationen der einzelnen von der Auswerteeinrichtung erfassten Stoffe. Durch eine zweidimensionale mathematische Dekonvolution mit der bekannten Pulssequenz des zu analysierenden Stoffgemischs sind so vorteilhafterweise die jeweiligen Spektren der Stoffe des Stoffgemischs in Abhängigkeit ihrer jeweiligen Retentionszeit zur Identifikation und Quantifizierung bestimmbar, wobei vorteilhafterweise gegenüber bisher bekannten, insbesondere kontinuierlich betriebenen Analyseverfahren ein verbessertes Signal-zu-Rausch-Verhältnis (SNR) und eine verbessere Nachweisgrenze erzielt wird.

Die erfindungsgemäße Hadamard-Transformation (HT) ermöglicht vorteilhafterweise ein Multiplexing des zu analysierenden Stoffgemisches mit der vorteilhafterweise bis zu drei diskrete Zustände ("-1", "0", "+1") kodiert werden können. Das zu analysierende Stoffgemisch wird dabei als Wellen- oder Teilchenpaket mit der binären Pseudozufallssequenzen (Modulationssequenz) kodiert. Anstelle der Hadamard-Matrix kann vorteilhafterweise eine daraus abgeleitete Simplex-Matrix verwendet werden, die lediglich zwei diskrete Zustände ("0", "1") kodiert und durch einfache Umformung aus der Hadamard-Matrix wie folgt erhalten werden kann:

Streichen der
1. Zeile und 1. Reihe

Modulationssequenz

$$H := \begin{bmatrix} 1 & 1 & 1 & 1 & 1 & 1 & 1 \\ -1 & -1 & -1 & 1 & -1 & 1 & 1 \\ -1 & -1 & 1 & -1 & 1 & 1 & -1 \\ -1 & 1 & -1 & 1 & 1 & -1 & -1 \\ 1 & -1 & 1 & 1 & -1 & -1 & -1 \\ -1 & 1 & 1 & -1 & -1 & -1 & 1 \\ 1 & 1 & -1 & -1 & -1 & 1 & -1 \\ 1 & -1 & -1 & -1 & 1 & -1 & 1 \end{bmatrix}$$

Austausch
−1 zu 1
1 zu 0

$$S := \begin{bmatrix} 1 & 1 & 1 & 0 & 1 & 0 & 0 \\ 1 & 1 & 0 & 1 & 0 & 0 & 1 \\ 1 & 0 & 1 & 0 & 0 & 1 & 1 \\ 0 & 1 & 0 & 0 & 1 & 1 & 1 \\ 1 & 0 & 0 & 1 & 1 & 1 & 0 \\ 0 & 0 & 1 & 1 & 1 & 0 & 1 \\ 0 & 1 & 1 & 1 & 0 & 1 & 0 \end{bmatrix}$$

Simplex Matrix

Die mathematische Dekonvolution erfolgt vorteilhafterweise durch Multiplikation des erhaltenen Signals mit der inversen Hadamard-Matrix beziehungsweise Simplex-Matrix:

$$I_{Rohdaten} \times S^{-1} = I_{Daten}$$

Vorteilhafterweise nutzt die Trenneinrichtung chromatographische und/oder elektrophoretische Trennverfahren und ist vorzugsweise ein Gaschromatograph oder ein überkritischer Flüssigchromatograph.

In einer weiteren vorteilhaften Ausgestaltung der Erfindung umfasst die Auswerteeinrichtung wenigsten einen Detektor und/oder wenigstens einen spektroskopischen und/oder spektrometrischen Detektor.

Zur Erzeugung von gepulsten Stoffgemischen, insbesondere komplexen chemischen und/oder biochemischen Stoffgemischen, wird verfahrensgemäß vorgeschlagen, dass wenigstens ein Stoffgemisch über wenigstens eine Kapillarleitung wenigstens einem Kanal kontinuierlich zugeführt wird, das Stoffgemisch in wenigstens einem in dem wenigstens einen Kanal angeordneten desaktivierten Glasrohr verdampft wird, der wenigstens eine Kanal über ein schaltbares Druckventil mit einer Gasströmung beaufschlagt wird und mit der Gasströmung beaufschlagtes verdampftes Stoffgemisch aus dem wenigstens einen Kanal in eine Nadel injiziert wird.

Vorteilhafterweise wird das schaltbare Druckventil mit Pulsen einer eindeutigen binären Sequenz geschaltet. Erfindungsgemäß sind dabei Schaltzeiten des schaltbaren Druckventils in einem Bereich von 1 ms bis etwa 10 ms, vorgesehen..

Eine Vorrichtung zur Durchführung des Verfahrens der Erfindung sieht eine Beaufschlagung des verdampften Stoffgemisches mit einer Veränderungen der Zusammensetzung des verdampften Stoffgemisches ausschließenden Gasströmung eines Gases und/oder eines Gasgemisches vor, besonders bevorzugt mit einem inerten Gas und/oder inerten Gasgemisch.

Vorteilhafterweise wird der wenigstens eine Kanal und/oder die Nadel durch Beaufschlagung mit der Gasströmung gespült, vorzugsweise gesteuert über das schaltbare Druckventil des Kanals.

Eine Ausgestaltung einer Vorrichtung mit wenigstens zwei in die Nadel injizierenden Kanälen sieht vor, dass die jeweiligen schaltbaren Druckventile der Kanäle synchron und/oder separat voneinander gesteuert werden.

Vorteilhafterweise wird die Verdampfung des Stoffgemisches gesteuert, vorzugsweise durch Steuerung der Temperatur einer Heizeinrichtung zur Verdampfung des Stoffgemisches. Vorteilhafterweise wird der Druck der Gasströmung gesteuert. Durch diese Maßnahmen, einzeln und/oder in Kombination miteinander, ist insbesondere eine weitere Verbesserung der Präzision der Pulssequenzen und deren definierten Schaltzeiten erzielbar.

Zur Erzeugung von gepulsten Stoffgemischen, insbesondere komplexen chemischen und/oder biochemischen Stoffgemischen, wird eine Vorrichtung vorgeschlagen, die gekennzeichnet ist, durch wenigstens einen Kanal mit wenigstens einer Kapillarleitung zur Zuführung wenigstens eines Stoffgemisches in den Kanal, mit wenigstens einem im Kanal angeordneten desaktivierten Glasrohr zur Verdampfung des wenigstens einen dem Kanal zugeführten Stoffgemisches im Kanal mit einer Heizeinrichtung und mit einem schaltbaren Druckventil zum Anschluss des Kanals an eine Gaszuleitung zur Beaufschlagung des wenigstens einen verdampften Stoffgemisches mit einer Gasströmung, und einem sich an den wenigstens einen Kanal strömungstechnisch anschließenden Ausgang zum Anschluss einer Gasableitung, vorzugsweise einer Injektionsnadel.

In einer weiteren Ausgestaltung der Vorrichtung nimmt die Einstromrichtung der Gasströmung zur Beaufschlagung des wenigstens einen verdampften Stoffgemisches über das schaltbare Druckventil zur Längserstreckungsrichtung des Kanals einen Winkel in einem Bereich von etwa 0° bis etwa 180° ein. Vorteilhafterweise verläuft die Einstromrichtung der Gasströmung zur Beaufschlagung des wenigstens einen verdampften Stoffgemisches im wesentlichen senkrecht zur Längserstreckungsrichtung des Kanals. Eine weitere Ausgestaltung der Vorrichtung sieht vor, dass die Gaszuleitung über das schaltbare Druckventil etwa mittig der Längserstreckungsrichtung des Kanals an den Kanal anschließbar ist. Durch diese Ausgestaltungen, einzeln und/oder in Kombination miteinander, ist sicherstellbar, dass Störungen der zu erzeugenden Pulssequenz durch die Beaufschlagung erzeugt werden oder generiert werden. Dadurch ist insbesondere die Präzision der zu erzeugenden Pulssequenz und der einzelnen Pulse verbesserbar.

Eine weitere Ausgestaltung einer Vorrichtung sieht vor, dass die Heizeinrichtung zumindest im Bereich des im Kanal angeordneten desaktivierten Glasrohrs angeordnet ist, wobei die Heizeinrichtung vorzugsweise in Form einer austauschbar anordbaren Heizkartusche ausgebildet ist. Die Ausgestaltung erlaubt so insbesondere ein einfaches und schnelles Austauschen der Heizeinrichtung. Eine weitere vorteilhafte Ausgestaltung sieht die Nutzung wenigstens eines Sensorikelementes zur Erfassung der Temperatur der Heizeinrichtung und/oder der Verdampfung vor, wobei die erfasste Temperatur vorzugsweise zur Steuerung der Heizeinrichtung nutzbar ist. Dadurch ist insbesondere die Präzision der zu erzeugenden Pulssequenz und der einzelnen Pulse weiter steuerbar und verbesserbar.

Vorteilhafterweise ist das Druckventil der Vorrichtung mit Schaltzeiten in einem Bereich von etwa 1 ms bis etwa 10 ms, schaltbar.

Die wenigstens eine Kapillarleitung der Vorrichtung ist vorteilhafterweise aus Metall, Glas und/oder Fused-Silica-Glas. Die Vorrichtung ist vorteilhafterweise aus Metall und/oder einer metallischen Legierung gefertigt, vorzugsweise einstückig.

Vorteilhafterweise werden das erfindungsgemäße Verfahren und die Vorrichtung zur Erzeugung von gepulsten Stoffgemischen, insbesondere komplexen chemischen und/oder biochemischen Stoffgemischen, mit einem erfindungsgemäßen Analyseverfahren genutzt, wobei das zu analysierende Stoffgemisch über die Nadel der Trenneinrichtung zugeführt wird beziehungsweise zuführbar ist.

Zur Erzeugung von gepulsten Stoffgemischen, insbesondere komplexen chemischen und/oder biochemischen Stoffgemischen, wird verfahrensgemäß ferner vorgeschlagen, dass ein kontinuierlicher Stoffgemischstrom nacheinander durch wenigstens zwei voneinander getrennte Kammern geführt wird, wobei in der ersten Kammer eine Fokussierung des Stoffgemischstroms und in der zweiten Kammer eine Modulation des fokussierten Stoffgemischstroms mit Pulsen einer eindeutigen binären Sequenz erfolgt.

Vorteilhafterweise erfolgt die Fokussierung des Stoffgemischstroms und/oder die Modulation des fokussierten Stoffgemischstroms mittels eines Kalt- und Warmgasstroms, wobei der Stoffgemischstrom zunächst ausgefroren und anschließend durch schnelles Aufheizen wieder freigesetzt wird.

In einer weiteren Ausgestaltung weisen die Kammern jeweils wenigstens eine Kaltgasjetdüse und wenigstens eine Warmgasjetdüse auf, deren Düsenöffnungen eine im wesentlichen senkrecht zur Strömungsrichtung des Stoffgemischstroms durch die jeweilige Kammer ermöglichenden Kaltbeziehungsweise Warmgasströmung ermöglichen. Vorteilhafterweise ermöglichen die Düsenöffnungen der wenigstens einen Kaltgasjetdüse und der wenigstens einen Warmgasjetdüse der jeweiligen Kammern eine im wesentlichen senkrecht zueinander stehende Strömung. Die Kalt- und/oder Warmgasjetdüsen der jeweiligen Kammern werden vorteilhafterweise mit Gasströmen von bis zu 40 l/min betrieben.

Eine weitere Ausgestaltung sieht vor, dass zumindest die Düsen der eine Modulation des fokussierten Stoffgemischstroms ermöglichenden Kammer mit Schaltzeiten in einem Bereich von etwa 1 ms bis etwa 10 ms, angesteuert werden.

Vorteilhafterweise werden die Düsen der wenigstens zwei Kammern getrennt und unabhängig voneinander angesteuert. In einer weiteren Ausgestaltung der Erfindung werden die Düsen der wenigstens zwei Kammern synchronisiert angesteuert, vorzugsweise mit unterschiedlichen Sequenzen angesteuert werden.

Eine weitere Ausgestaltung sieht eine Veränderungen der Zusammensetzung des verdampften Stoffgemisches ausschließende Gasströmung eines Gases und/oder eines Gasgemisches für den Kalt- und/oder Warmgasstroms vor, besonders bevorzugt realisiert durch Nutzung eines inerten Gases und/oder inerten Gasgemisches. Vorteilhafterweise wird der Druck der jeweiligen Gasströmung gesteuert.

Zur Erzeugung von gepulsten Stoffgemischen, insbesondere komplexen chemischen und/oder biochemischen Stoffgemischen, wird ferner eine Vorrichtung vorgeschlagen, die gekennzeichnet ist, durch wenigstens zwei voneinander getrennte, jeweils einen Eingang und einen Ausgang aufweisende Kammern zur Führung eines kontinuierlichen Stoffgemischstroms durch die jeweilige Kammer, wobei die Kammern in Strömungsrichtung des Stoffgemischstroms durch die Kammern nacheinander angeordnet sind und wobei die Kammern jeweils wenigstens eine Kaltgasjetdüse und wenigstens eine Warmgasjetdüse aufweisen, deren Düsenöffnungen eine im wesentlichen senkrecht zur Strömungsrichtung des Stoffgemischstroms durch die jeweilige Kammer ermöglichende Kalt- beziehungsweise Warmgasströmung ermöglichen.

In einer weiteren Ausgestaltung sind die Düsenöffnungen der wenigstens einen Kaltgasjetdüse und der wenigstens einen Warmgasjetdüse der jeweiligen Kammern ausgebildet, eine im wesentlichen senkrecht zueinander stehende Strömung zu ermöglichen.

Vorteilhafterweise sind die Kalt- und/oder Warmgasjetdüsen der jeweiligen Kammern mit Gasströmen von bis zu 40 l/min betreibbar.

In einer weiteren vorteilhaften Ausgestaltung ist die in Strömungsrichtung des Stoffgemischstroms erste Kammer ausgebildet eine Fokussierung des Stoffgemischstroms zu ermöglichen und ist die in Strömungsrichtung des Stoffgemischstroms zweite Kammer ausgebildet eine Modulation des fokussierten Stoffgemischstroms mit Pulsen einer eindeutigen binären Sequenz zu ermöglichen.

Vorteilhafterweise sind zumindest die Düsen der eine Modulation des fokussierten Stoffgemischstroms ermöglichenden Kammer mit Schaltzeiten in einem Bereich von etwa 1 ms bis etwa 10 ms, ansteuerbar.

Vorteilhafterweise werden das weitere erfindungsgemäße Verfahren und die Vorrichtung zur Erzeugung von gepulsten Stoffgemischen, insbesondere komplexen chemischen und/oder biochemischen Stoffgemischen, mit einem erfindungsgemäßen Analyseverfahren genutzt wobei das zu analysierende Stoffgemisch über den Ausgang der zweiten Kammer der Trenneinrichtung zugeführt wird beziehungsweise zuführbar ist.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:

Fig.1      in einer schematischen Prinzipdarstellung ein Ausführungsbeispiel für den prinzipiellen Aufbau einer Anordnung zur Durchführung einer erfindungsgemäßen Analyse von Stoffgemischen;

Fig. 2      in einer schematischen Prinzipdarstellung ein weiteres Ausführungsbeispiel für den prinzipiellen Aufbau einer Anordnung zur Durchführung einer erfindungsgemäßen Analyse von Stoffgemischen;

Fig.3      in einer schematischen Darstellung den Aufbau eines Ausführungsbeispiels einer Vorrichtung zur Erzeugung von gepulsten Stoffgemischen;

Fig. 4a bis 4c      eine schematische Seiten-, Front- und Schnittansicht der Vorrichtung nach Fig. 3;

Fig. 5      in einer schematischen Darstellung den Aufbau eines weiteren Ausführungsbeispiels einer Vorrichtung zur Erzeugung von gepulsten Stoffgemischen;

Fig. 6a bis 6c      eine schematische Seiten-, Front- und Schnittansicht der Vorrichtung nach Fig. 5;

Fig. 7      in einer schematischen Darstellung den Aufbau eines weiteren Ausführungsbeispiels einer Vorrichtung zur Erzeugung von gepulsten Stoffgemischen;

Fig. 8      in einem Diagramm eine gemessene Injektionsstabilität einer eindeutigen binären Sequenz eines gepulsten Stoffgemisches mit 127 Pulsen;

Fig. 9      einen vergrößerten Ausschnitt des Diagramms nach Fig. 8

Fig. 10      in einem Diagramm eine gemessene Injektionsstabilität einer eindeutigen binären Sequenz eines gepulsten Stoffgemisches mit 2048 Pulsen;

Fig. 11      in einer schematischen Darstellung Injektionsabschnitte zu analysierender Stoffgemische innerhalb einer eindeutigen binären Sequenz;

Fig. 12      in einem Diagramm die erfasste Konzentrationsänderung eines zu analysierenden Stoffgemischs;

Fig. 13      in einer schematischen Darstellung den Ablauf einer erfindungsgemäßen Analyse und

Fig. 14      in einer weiteren schematischen Darstellung den Ablauf einer erfindungsgemäßen Analyse.

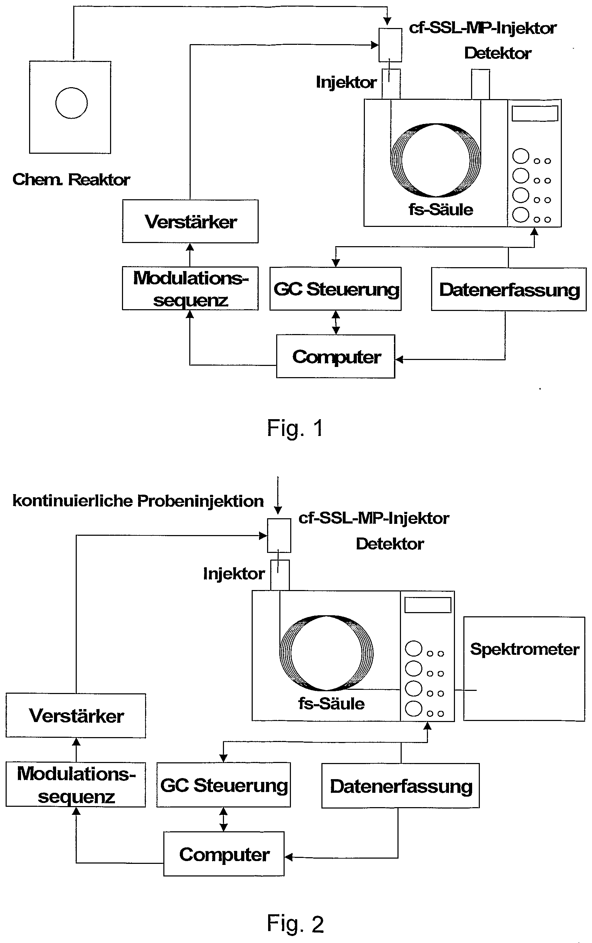

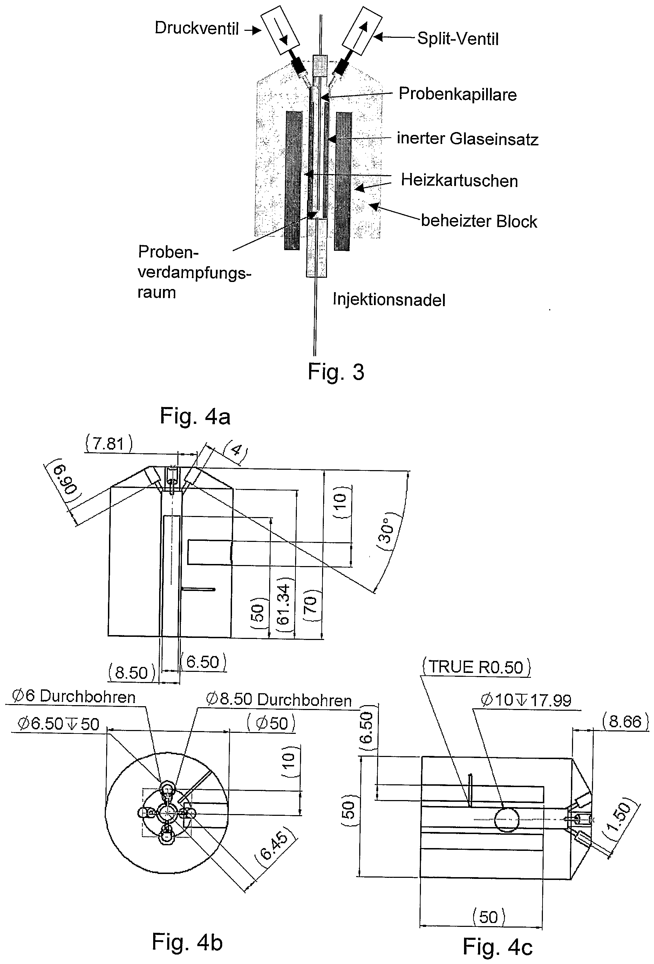

Fig. 1 und Fig. 2 zeigen jeweils in einer schematischen Prinzipdarstellung ein Ausführungsbeispiel für den prinzipiellen Aufbau einer Anordnung zur Durchführung einer erfindungsgemäßen Analyse von Stoffgemischen, insbesondere komplexen chemischen und/oder biochemischen Stoffgemischen. Dabei wird ein von einem chemischen Reaktor kommendes, zu analysierendes Stoffgemisch als kontinuierlicher Strom einer Vorrichtung (Injektor) zur Erzeugung von gepulsten Stoffgemischen zugeführt. Ausführungsbeispiele entsprechender Vorrichtungen zur Erzeugung von gepulsten Stoffgemischen sind in Fig. 3 bis Fig. 7 dargestellt und werden nachfolgend im Zusammenhang mit diesen näher erläutert. Der kontinuierliche Stoffgemischstrom des zu analysierenden Stoffgemischs wir bei dem Ausführungsbeispiel gemäß Fig. 1 von einem chemischen Reaktor geliefert. Die von der Vorrichtung zur Erzeugung von gepulsten Stoffgemischen erzeugten Stoffgemischpulse werden dann auf die Trennsäule (fused-silica-Säule (fs-Säule)) eines als Trenneinrichtung dienenden Gaschromatographen (GC) gegeben. Seitens des Gaschromatographen (GC) werden die Stoffe des zu analysierenden Stoffgemisches voneinander getrennt. Die voneinander getrennten Stoffe werden dann seitens einer Auswerteeinrichtung erfasst. Die Auswerteeinrichtung ist bei dem in Fig. 1 dargestellten Ausführungsbeispiel durch einen Detektor des Gaschromatographen ausgebildet. Bei dem in Fig. 2 dargestellten Ausführungsbeispiel ist die Auswerteeinrichtung ein mit dem Gaschromatographen (GC) gekoppeltes Spektrometer. Die Komponenten der Anordnung, das heißt eine Steuereinrichtung (GC-Steuerung) des Gaschromatographen (GC), eine Datenerfassungseinrichtung und eine von der Vorrichtung (Injektor) zur Erzeugung von Stoffgemischpulsen als Modulator genutzte, mit einem Verstärker verbundene Einrichtung (Modulationssequenz) zur Erzeugung einer eindeutigen binären Sequenz der Stoffgemischpulse, werden vorliegend von einer mit den Komponenten verbundenen Recheneinrichtung (Computer) gesteuert.

Zur Durchführung einer erfindungsgemäßen Analyse von Stoffgemischen mittels Multiplexing ist eine präzise Kontrolle der Injektion des Stoffgemisches (Analyten) in das chromatographische Trennsystem erforderlich. Diese Kontrolle umfasst insbesondere eine präzise und definierte zeitliche Kontrolle des Zeitintervall zwischen aufeinanderfolgenden Injektionen des gepulsten Stoffgemisches in die Trenneinrichtung (Gaschromatographen) sowie der Injektionsdauer innerhalb eines solchen Zeitintervalls. Ferner ist eine präzise und definierte Kontrolle der Quantität des Stoffgemisches (Probenquantität) erforderlich.

Die bisher im Stand der Technik zur Erzeugung von gepulsten Stoffgemischen beispielsweise im Bereich der Gas- und Flüssigchromatographie oder der Kapillarelektrophorese zum Einsatz kommenden Ventilschaltungen sind langsam und die Steuerung des Probenvolumens ist insbesondere durch Probenschleifen unflexibel. Ferner treten durch eine direkt mit dem chromatographischen System gekoppelt Ventilschaltung Druckstöße auf, die zu sogenannten Systempeaks im Chromatogramm führen, da kein kontinuierlicher Fluss im chromatographischen System auftritt.

Die in Fig. 1 und Fig. 2 genutzte Vorrichtung (Injektor cf-SSL-MP-Injektor) zur Erzeugung von gepulsten Stoffgemischen ist, vorzugsweise für die Gaschromatographie (GC) (vgl. Fig. 1 und Fig. 2) durch einfache Montage auf einen vorhanden split/splitless Injektor des Gaschromatographen anschließbar. Eine entsprechende Anwendung durch einfachen Anschluss ist vorteilhafterweise auch für eine hier nicht explizit dargestellte überkritische Flüssigchromatographie (SFC) gegeben.

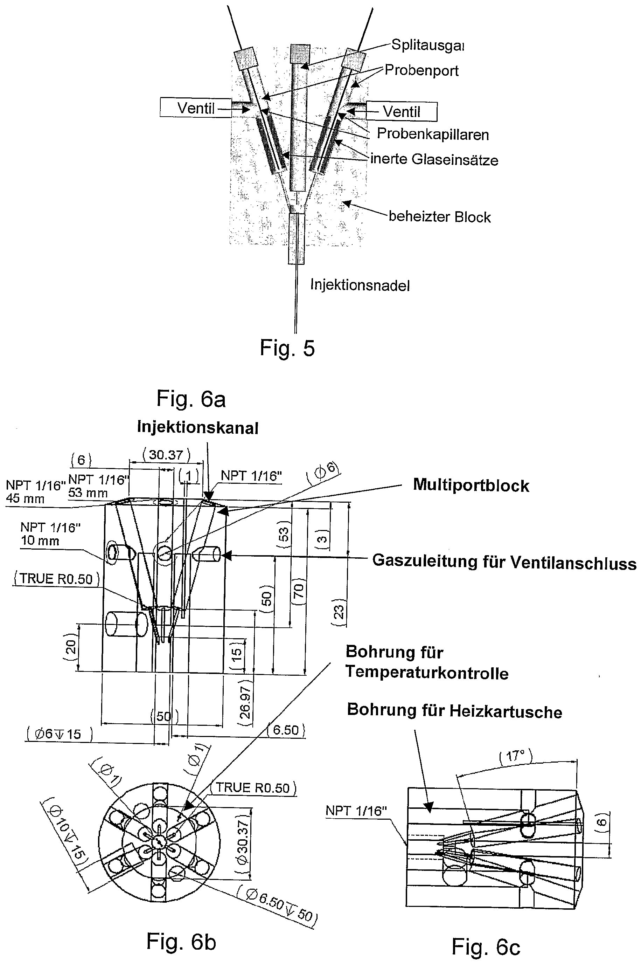

Fig. 3 und Fig. 4a bis 4c sowie Fig. 5 und Fig. 6a bis 6c zeigen jeweils ein Ausführungsbeispiel für eine Vorrichtung (Injektor, cf-SSL-MP-Injektor) zur Erzeugung von gepulsten Stoffgemischen. Mit dem Ausführungsbeispiel gemäß Fig. 3 und Fig. 4a bis 4c ist ein zu analysierendes Stoffgemisch in eine Trenneinrichtung injizierbar. Das Ausführungsbeispiel gemäß Fig. 5 und Fig. 6a bis 6c erlaubt ein geschaltetes injizieren von bis zu sieben Stoffgemischen.

Die Vorrichtungen (kontinuierliche split/splittless-Multiplexinginjektoren (cf-SSL-MP-Injektor)) bestehen jeweils aus einem beheizbaren Metallblock (Probenblock), der mit Bohrungen für die jeweiligen Injektionskanäle - bei dem Ausführungsbeispiel gemäß Fig. 3 und Fig. 4a bis 4c ein Injektionskanal und bei dem Ausführungsbeispiel gemäß Fig. 5 und Fig. 6a bis 6c sieben Injektionskanäle (Probenkanäle) -. versehen ist. Die Injektionskanäle nehmen Kapillarleitungen des jeweils zu analysierenden Stoffgemischs, also der jeweiligen Probenquelle, vorzugsweise von einem parallelisierten Reaktor, Multititerplatten oder dergleichen Quelle, auf. Die zu analysierenden Stoffgemische (Analyten) werden durch die vorliegend aus Metall, Glas und/oder Fused-Silica-Glas bestehenden Kapillarleitungen kontinuierlich zugeführt und im Probenblock in einem desaktivierten Glasrohr verdampft. Der Probenblock verfügt dazu über Heizvorrichtungen und Thermoelemente zur exakten Temperaturkontrolle. Überschüssige verdampfte zu analysierende Stoffgemische (Analyte) werden über Spülleitungen abgeführt (Rückspülung). Jeder Injektionskanal (Probenkanal) verfügt über eine Gaszuleitung, die mit einem schnellen Druckventil mit Schaltzeiten im Millisekunden-Bereich steuerbar ist. Vorteilhafterweise ist diese Gaszuleitung auch als Spülleitung des jeweiligen Probenkanals nutzbar. Die Spülung kann dabei auch mit dem steuerbaren beziehungsweise schaltbaren Druckventil kontrolliert werden. Als Gase können sämtliche inerte Gase und Gasgemische verwendet werden, die zu keiner Veränderung der Analytzusammensetzung führen. Die jeweiligen Gaszuleitungen können einzeln und oder synchron gesteuert werden. Durch einen gezielten kurzen Druckstoß erfolgt die Injektion des Analytgemisches in eine Nadel, die in den vorhandenen split/splittless Injektor der Trenneinrichtung, bei Fig. 1 und Fig. 2 des Gaschromatographen, eingeführt wird beziehungsweise ist und dort durch den Injektor beheizt wird.

Die jeweilige Ausgestaltung der Vorrichtungen zur Erzeugung von gepulsten Stoffgemischen gemäß Fig. 3 und Fig. 4a bis 4c beziehungsweise Fig. 5 und Fig. 6a bis 6c, also mit einem Injektionskanal (Probenkanal) bei dem Ausführungsbeispiel nach Fig. 3 und Fig. 4a bis 4c beziehungsweise mit sieben Injektionskanäle (Probenkanäle) bei dem Ausführungsbeispiel gemäß Fig. 5 und Fig. 6a bis 6c, erlaubt zudem über die Möglichkeit der Spülung der Injektionsnadel durch einen Trägergasfluss, vorliegend im Bereich von ml/min, der Trenneinrichtung (Gaschromatographen). Dadurch wird eine permanente Spülung erreicht und eine Kontamination der unterschiedlichen mittels Multiplexing zu analysierenden Stoffgemische (Analytgemische) vermieden. Ein solcher zusätzlicher Splittfluss ist vorliegend an den jeweiligen Injektionsventilen (Rückspülung) und/oder an einem im Heizblock integrierten Splitausgang einstellbar. Der gesamte Splittfluss ergibt sich aus der Summe der jeweiligen Flüsse an den Ventilen. Das Volumen zwischen Injektionsnadel und Verdampfungsraum der jeweiligen Kapillaren ist in einer solchen Anordnung vorteilhafterweise minimiert, insbesondere um Totvolumen zu vermeiden. Da ferner durch diese Ausgestaltung der Vorrichtung der Druckstoß außerhalb des Injektors des Trenneinrichtung (Gaschromatographen) stattfindet und durch die Druckregelung der Trenneinrichtung (Gaschromatographen) bzw. des Splitsystems abgefangen wird, treten vorteilhafterweise keine Druckschwankungen bei der Trennung durch die Vorrichtung (cf-SSL-MP-Injektor) auf.

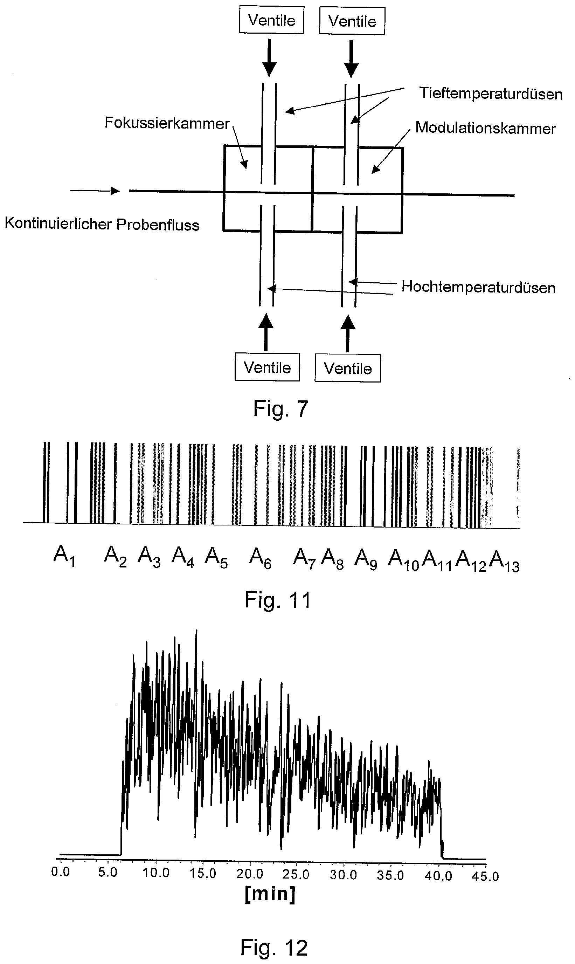

Fig. 7 zeigt ein weiteres Ausführungsbeispiel einer Vorrichtung zur Erzeugung von gepulsten Stoffgemischen. Dabei wird der kontinuierliche Strom eines zu analysierenden Stoffgemisches direkt auf der Trennsäule einer Trenneinrichtung, vorliegend, wie in Fig. 1 und Fig. 2 dargestellt des Gaschromatographen, durch einen doppelfokussierenden Tieftemperaturmodulator moduliert. Der in Fig. 7 im prinzipiellen Aufbau dargestellte erlaubt dabei insbesondere eine erfindungsgemäße für zweidimensionale Trenntechniken einsetzbare Kodierung des zu analysierenden Stoffgemisches. Wie anhand von Fig. 7 erkennbar, verfügt der Säulentieftemperaturmodulator über zwei getrennte Modulationskammern. Die erste Kammer erreicht die Fokussierung des zu analysierenden Stoffgemischs (Analyten), in der zweiten Kammer erfolgt die Modulation des zu analysierenden Stoffgemischs (Analyten) gemäß einer binären Pseudozufallssequenz, welche von der in Fig. 1 und Fig. 2 dargestellten Recheneinrichtung (Computer) und/oder einer separaten Einrichtung zur Erzeugung einer entsprechenden Modulationssequenz erzeugt wird. Mittels Kaltluft- und Warmluftjetdüsen mit einem Volumenstrom von bis zu 40 l/min wird das zu analysierende Stoffgemisch (Analyten) auf der Säule zunächst mittels Kaltluft ausgefroren, dann durch schnelles Aufheizen mittels Warmluft wieder freigesetzt. Die Jetdüsen der Vorrichtung (Säulentieftemperaturmodulator) werden dabei getrennt und unabhängig voneinander angesteuert. Dabei sind die beiden Kammern zwar synchronisiert, werden aber mit unterschiedlichen Sequenzen angesteuert. Die Steuerung erfolgt vorteilhafterweise so, dass kein "Auseinanderlaufen" der Analyten auf der Säule erfolgen kann.

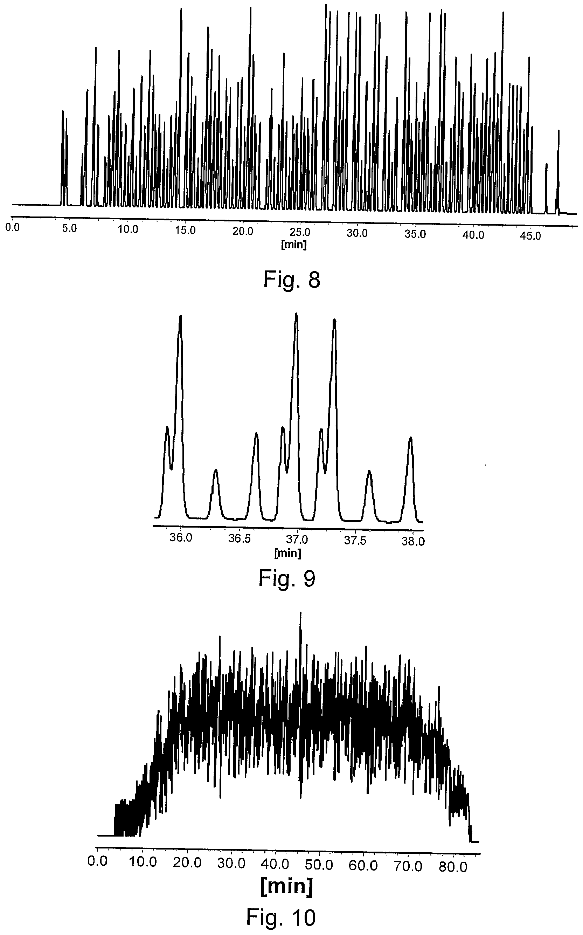

Fig. 8 und Fig. 10 zeigen jeweils ein Diagramm einer gemessenen Injektionsstabilität einer eindeutigen binären Sequenz eines gepulsten Stoffgemisches über der Zeit. Fig. 8 zeigt dabei die Injektionsstabilität über eine Zeitdauer von 50 min einer 7-bit Sequenz (entsprechend $2^7$=127 Elementen) mit einem Injektionsintervall von $\Delta t$ = 20 s, einer Pulsdauer von $\Delta t_{Puls}$ = 10 ms, bei einer 10 Hz Datenakquisition. Fig. 9 zeigt einen vergrößerten Ausschnitt des Diagramms nach Fig. 8. Anhand von Fig. 9 ist deutlich die Stabilität der Peakflächen von drei unterschiedlichen Stoffgemischen (Analyten) erkennbar. Fig. 10 zeigt die Injektionsstabilität bei kurzen Injektionsintervallen mit 1023 Injektionen in 34 min einer 11-bit Sequenz (entsprechend $2^{11}$=2048 Elementen) mit einem Injektionsintervall von $\Delta t$ = 1 s, einer Pulsdauer von $\Delta t_{Puls}$ = 2 ms, bei einer 10 Hz Datenakquisition.

Wie anhand der Figuren 8 bis 10 erkennbar erreichen ist mit den in den Fig. 1 bis 7 dargestellten Anordnungen eine außerordentlich gute Injektionsstabilität auch bei kurzen Injektionsintervallen, insbesondere Injektionsintervallen kleiner 400 ms, erzielbar. Dabei kann die Pulsdauer bei gleichbleibender Stabilität auch über das gesamte Injektionsintervall beibehalten werden ($\Delta t = \Delta t_{Puls}$).

Da die Pulsdauer gegenüber dem Injektionsintervall kurz gewählt werden kann, ist vorteilhafterweise eine Mehrfachinjektion innerhalb eines Injektionsintervalls möglich (Oversampling), wodurch der Durchsatz zu analysierender Stoffgemische (Probendurchsatz) weiter steigerbar ist.

Mit der in Fig. 5 und Fig. 6a bis 6c dargestellten Vorrichtung zur Erzeugung von gepulsten Stoffgemischen ist insbesondere im Zusammenhang mit der in Fig. 1 dargestellten Anordnung zur Analyse von Stoffgemischen eine Hochdurchsatzanalyse realisierbar. Dabei werden zu analysierende Stoffgemische (Analytproben) mit einer eindeutigen binären Sequenz kodiert. Die Kodierung der Analytproben erfolgt durch Injektion der Analyte gemäß einer binären Pseudozufallssequenz oder einer Zufallssequenz, die aus einer mit einer wiederholenden Sequenz unterteilten Pseudozufallssequenz besteht, die $2^n$-x Elemente aufweist (im Falle von Simplex- und Hadamardmatrizen ist x = 1). Dabei können die jeweiligen Injektionsabschnitte für die jeweiligen Analytproben unterschiedlich lang sein, um einen äquivalenten Informationsinhalt zu gewährleisten. Fig. 11 zeigt in einer schematischen Darstellung entsprechende Injektionsabschnitte für Proben A1 bis A13 innerhalb einer binären Pseudozufallssequenz. Die Injektionssequenz besteht aus der gleichen Anzahl der Elemente 0 und 1 bzw. die Anzahl kann um 1 differieren ($2^n$-1).

Die in Fig. 11 exemplarisch dargestellten Injektionsabschnitte der Proben A1 bis A13 können zudem in Kalibrier- und Messbereiche aufgeteilt werden, um eine kontinuierliche Quantifizierung mit innerer Standardisierung zu ermöglichen. Ein Element 1 in der binären Pseudozufallssequenz stellt dabei eine Injektion in Form eines Injektionsstoßes dar. Bei ein Elementen 0 findet keine Injektion statt. Die jeweiligen Elemente können zudem noch aufgeteilt werden in Untermodulationssequenzen, die für alle Elemente gleich aufgebaut sind, vorteilhafterweise um Mehrfachinjektionen (Oversampling) zu ermöglichen beziehungsweise zu gewährleisten.

Jedes zu analysierende Stoffgemisch (Probe) wird während der Analyse vorteilhafterweise mehrfach hintereinander injiziert, um eine Quantifizierung der jeweiligen Komponenten zu ermöglichen. Die minimale Anzahl benötigter Injektionen zur eindeutigen Identifizierung und Quantifizierung der einzelnen Analyte in einer Mischung ist dabei mit den folgenden charakteristische Größen bestimmbar:

Anzahl der Proben: $i_{max}$

Anzahl der Analyte in einer Probe: $k_{max}$

Anzahl der Zeitintervalle $\Delta t$ [s] aus der Modulationssequenz der Länge $n$:

$$N = 2^n\text{-}1$$

Datenakquisitionsfrequenz und oder Injektionsfrequenz (Oversampling) pro Zeitintervall: $f_{OVR}$

Maximale Retentionszeit: $t_R^{max}$ [min]

Maximale Anzahl analysierbarer Proben:

$$i_{max} = \frac{\left(N + \dfrac{t_R^{max}}{60\,\Delta t}\right)}{k_{max}} f_{OVR}$$

Anzahl notwendiger Wiederholungsinjektionen pro Probe:

$$n_{Injektionen} = \frac{N}{2 \cdot i_{max}} = \frac{N \cdot k_{max}}{2\left(N + \dfrac{t_R^{max}}{60\Delta t}\right) f_{OVR}}$$

Gesamtanalysendauer:

$$t_{Analysendauer} = \frac{\dfrac{N \cdot \Delta t}{60} + t_R^{max}}{i_{max}}$$

Probendurchsatz:

$$P = \frac{i_{max}}{t_{Analysendauer}} = \frac{i_{max}^2}{\left(\dfrac{N \cdot \Delta t}{60} + t_R^{max}\right)} = \frac{\left(N + \dfrac{t_R^{max}}{60\Delta t}\right) \cdot i_{max}}{k_{max}\left(\dfrac{N \cdot \Delta t}{60} + t_R^{max}\right)}$$

Mit den in Fig. 3 und Fig. 4a bis 4c sowie in Fig. 7 dargestellten Vorrichtungen zur Erzeugung von gepulsten Stoffgemischen (Tieftemperaturmodulation) ist insbesondere im Zusammenhang mit der in Fig. 2 dargestellten Anordnung zur Analyse von Stoffgemischen eine hochauflösende Analyse realisierbar. Dabei wird ein zu analysierendes Stoffgemisch (Analytprobe) mit einer eindeutigen binären Sequenz kodiert. Die Kodierung der Analytprobe erfolgt durch Injektion Vorrichtung gemäß Fig. 3 und Fig. 4a bis 4c) oder Tieftemperaturmodulation (Vorrichtung gemäß Fig. 7) der Analytprobe gemäß einer binären Pseudozufallssequenz oder einer Zufallssequenz, die aus einer mit einer wiederholenden Sequenz unterteilten Pseudozufallssequenz besteht, die $2^n$-x Elemente aufweist (im Falle von Simplex- und Hadamardmatrizen ist x = 1). Die Injektionssequenz besteht aus der gleichen Anzahl der Elemente 0 und 1 beziehungsweise die Anzahl kann um 1 differieren ($2^n$-1). Im Falle eines Elements 1 wird eine Probe injiziert beziehungsweise durch den Heißluftjet freigesetzt. Im Falle eines Elements 0 erfolgt keine Injektion beziehungsweise ein Einfrieren durch den Kaltluftjet. Die Injektionsintervalle werden entsprechend der benötigten Zeit für einen sogenannten Vollscan oder eines Vielfachen der Dauer eines sogenannten Vollscans des Spektrometers gewählt. Der Scan (Erfassung) des Spektrometers und das Injektionsintervall werden dabei miteinander synchronisiert. Die Injektionspulsdauer beziehungsweise Modulationsdauer beim Tieftemperaturmodulator kann gleich oder kürzer als das Injektionsintervall beziehungsweise das Modulationsintervall gewählt werden. In jedem Injektionsintervall beziehungsweise Modulationsintervall können vorteilhafterweise auch mehrere unterschiedliche spektroskopische oder spektrometrische Experimente durchgeführt werden. Vorzugsweise erfolgt ein Massenvollscan und MS/MS bzw. $MS^n$-Experimente zur eindeutigen Identifizierung und Quantifizierung.

Fig. 12 zeigt in einem Diagramm die zeitliche graduelle Konzentrationsänderung eines zu analysierenden Stoffgemischs (Analyten) als von der Auswerteeinrichtung erfasstes Gesamtchromatogramm. Die entsprechenden Daten des Gesamtchromatogramms liegen seitens der Auswerteeinrichtung und/oder seitens einer mit dieser verbundenen Datenerfassungseinrichtung (vgl. Fig. 1 und Fig. 2) vor. Die Rohdaten werden mittels einer Recheneinrichtung (Computer) der Auswerteeinrichtung insbesondere im Rahmen einer Dekonvolution zur weiteren Auswertung genutzt.

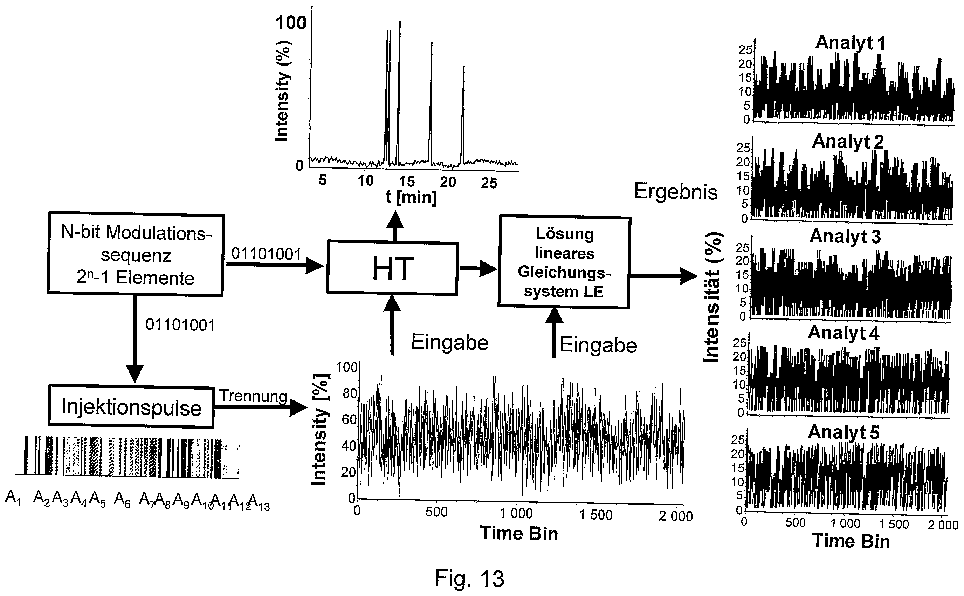

Der Ablauf einer erfindungsgemäßen Analyse eines Stoffgemischs ist in Fig.13 symbolisch dargestellt. Die Auswertung der Analyse erfolgt unter Nutzung eines Dekonvolutionsverfahrens. Das Dekonvolutionsverfahren weist die folgenden drei Schritte auf:

1. Dekonvolution der Rohdaten mit der inversen Kodiermatrix, um das Gesamtchromatogramm zu erhalten;

2. Berechnung der relativen Konzentrationsverteilung der einzelnen Analyten aus Schritt 1 und Füllen der Konzentrationsverteilungsmatrix sowie des Konzentrationsvektors der einzelnen Analyten und

3. Lösung des linearen Gleichungssystem zur Ermittlung der Konzentrationen der einzelnen Analyte.

Durch die Modulation von n Analytinjektionen wird ein Gesamtchromatogramm (vgl. Fig. 12 und Fig. 13) erhalten, das eine Überlagerung von n Einzelchromatogrammen darstellt. Die direkte Multiplikation der Rohdaten in der zirkulären Darstellung (nach $2^n-1$ Zeitintervallen wird die Signalintensität zu den Vektorelementen am Anfang wieder hinzuaddiert) mit der inversen Hadamard-, Simplex- oder inversen Matrix der bekannten binären Pseudozufallssequenz ergibt das Gesamtchromatogramm (vgl. Fig. 13) der jeweiligen Analyten.

Aus dem Gesamtchromatogramm ergibt sich zum einen die Zahl $k_{max}$ der unterschiedlichen Analyten in den jeweiligen Proben i und die jeweiligen Peakformen. Dabei wird mit den erfindungsgemäßen Ausgestaltungen des Analyseverfahrens eine sehr gute Auflösung der Peaks erzielt, so dass sich das Verfahren auch auf Fragestellungen mit kleinen Trennfaktoren, wie sie beispielsweise bei Enantiomerentrennungen zur Bestimmung des Enantiomerenüberschusses auftreten, anwenden lässt.

Da die Hadamardtransformation keine Analytschwankungen berücksichtigen kann, ist dieses Gesamtchromatogramm (vgl. Fig. 12) durch Abweichungen in der Basislinie charakterisiert, die allerdings wiederum eine Konvolution der jeweiligen Analytkonzentrationen darstellt. Daher wird zunächst wird eine Peakformanalyse durchgeführt, um die Verteilungsfunktion $\Psi(A_k)$ der jeweiligen Analyte in Abhängigkeit der Zeit zu erhalten. Dabei wird das Maximum jedes einzelnen Analytpeaks auf 1 normiert. Damit wird anschließend die Konzentrationsverteilungsmatrix gefüllt und zwar in der Art und Weise, dass in jeder Spalte die Relativkonzentration $\Psi(A_{i,j,k})$ des Analyten $A_k$ der i-ten Probe und j-ten Wiederholungsinjektion in Abhängigkeit der Injektionssequenz und des Zeitintervalls $\Delta t$ wie folgt steht:

$$Chromatogramm = ij \sum_{k=1}^{k_{max}} \Psi(A_k)$$

$$= \begin{bmatrix} \Psi(A_1(1)) & \Psi(A_2(1)) & \Psi(A_3(1)) & \cdot & \cdot & & \cdot & & \cdot & & \Psi(A_k(1)) \\ \Psi(A_1(2)) & \Psi(A_2(2)) & \Psi(A_3(2)) & & & & & & & & \cdot \\ \Psi(A_1(3)) & \Psi(A_2(3)) & \Psi(A_3(3)) & & & & & & & & \cdot \\ \cdot & & & \cdot & & & & & & & \\ \cdot & & & & \cdot & & & & & & \\ \cdot & & & & & \Psi(A_{k-2}(t-2)) & \Psi(A_{k-1}(t-2)) & \Psi(A_k(t-2)) \\ \cdot & & & & & \Psi(A_{k-2}(t-1)) & \Psi(A_{k-1}(t-1)) & \Psi(A_k(t-1)) \\ \Psi(A_1(t)) & \cdot & \cdot & \cdot & & \Psi(A_{k-2}(t)) & \Psi(A_{k-1}(t)) & \Psi(A_k(t)) \end{bmatrix} \begin{bmatrix} A_{1,1,1} \\ A_{i,1,1} \\ A_{1,2,1} \\ A_{i,j,1} \\ A_{1,1,2} \\ A_{1,1,2} \\ A_{i,j,2} \\ A_{i,j,k} \end{bmatrix} = \begin{bmatrix} I_1 \\ \cdot \\ \cdot \\ \cdot \\ \cdot \\ \cdot \\ \cdot \\ I_t \end{bmatrix}$$

Jede Zeile stellt dabei die Summe der Relativkonzentrationen der jeweiligen Analyte in den Proben dar. Diese Vorgehensweise kann auf das Rohchromatogramm in der zirkulären und nicht-zirkulären Darstellung angewandt werden. Die jeweilige Konzentration der Analyte ergibt sich als Konzentrationsvektor, der mit der Konzentrationsverteilungmatrix multipliziert die Signalintensitäten in jedem Zeitintervall des Rohchromatogramms ergibt. Damit erhält man ein lineares Gleichungssystem in Matrixdarstellung, das durch iteratives Eliminieren von Variablen oder durch Anwendung der Gauß-Jordan Methode gelöst werden kann.

Die Lösung ist die Konzentration der jeweiligen Analyte in den Proben i. Zur Optimierung, Überprüfung und Beurteilung der Qualität der so erhalten Lösung des Gleichungssystem wird das Rohchromatogramm mittels iterativer Anpassung mit dem Konzentrationsvektor (durch Bildung der Differenz oder durch Division) und anschließender Hadamard-Transformation in ein Gesamtchromatogramm überführt, dessen Abweichungen in der Basislinie durch weitere Feinabstimmungsschritte bei der Lösung des linearen Gleichungssystems minimiert werden.

Fig. 13 zeigt auf der rechten Seite die Konzentration der Analyte der jeweiligen Proben in einer zirkulären Darstellung. Durch zirkuläre Verschiebung gemäß der binären Pseudozufallssequenz und dem jeweiligen Zeitintervall werden die Konzentrationen der Analyte in den einzelnen Proben erhalten. Diese Konzentrationsdaten können mit weitere in Absolutkonzentrationen oder Relativkonzentration, vorzugsweise durch Einsatz einer internen Standardisierung, weiter verarbeitet werden.

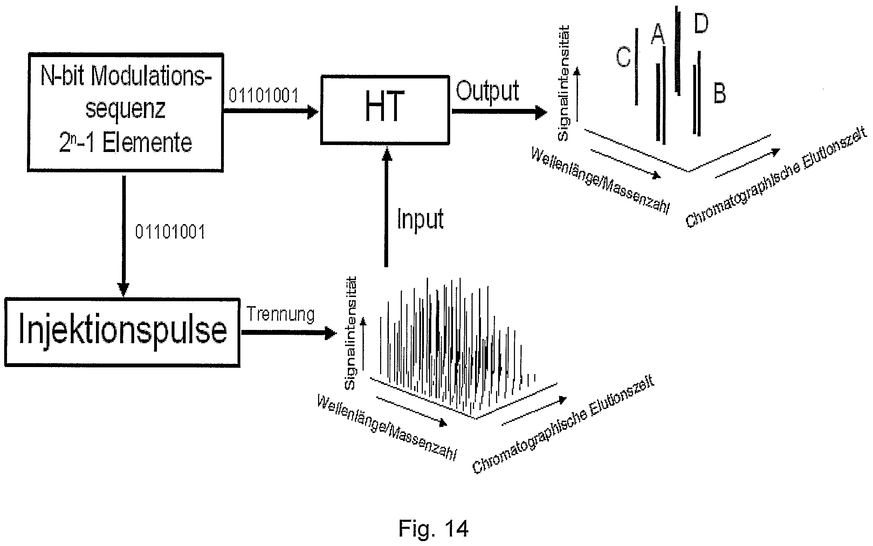

Anhand des in dem Diagramm gemäß Fig. 14 exemplarisch dargestellten Ablaufs einer erfindungsgemäßen Analyse eines Stoffgemischs ist die Nutzung einer zweidimensionalen Erfassung und Auswertung erkennbar. Bei dem dabei zum Einsatz kommenden Dekonvolutionsverfahren werden die Spektren des Stoffgemischs identifiziert. Das Dekonvolutionsverfahren weist die folgenden Schritte auf:

1. Extraktion der jeweiligen Wellenzahl oder Masse/Ladungs-Verhältnisses aus allen von der Auswerteeinrichtung detektierten Spektren und

2. Hadamard-Transformation mit der bekannten Pseudozufallssequenz.

Daraus ergeben sich zu den jeweiligen Peaks im konventionellen Chromatogramm die Spektren, mit verbessertem Signal-zu-Rausch-Verhältnis (SNR) und verkürzten Analysedauern.
Die in den Figuren der Zeichnung dargestellten Ausführungsbeispiele der Erfindung dienen lediglich der Erläuterung der Erfindung und sind für diese nicht beschränkend.

**Patentansprüche**

1. Verfahren zur Analyse von mehreren Stoffgemischen, insbesondere komplexen chemischen und/oder biochemischen Stoffgemischen, wobei mehrere zu analysierende Stoffgemische einer Trenneinrichtung zugeführt werden, durch chemisch und/oder physikalisch bewirkten Transport die Stoffe des zu analysierenden Stoffgemisches seitens der Trenneinrichtung voneinander getrennt werden, die voneinander getrennten Stoffe seitens einer Auswerteeinrichtung erfasst werden und die mehreren zu analysierenden Stoffgemische der Trenneinrichtung in Pulsen einer jeweiligen eindeutigen binären Sequenz zugeführt werden, **dadurch gekennzeichnet, dass** die jeweilige eindeutige binäre Sequenz aus einer mit einem binären Zufallsgenerator erzeugten Sequenz gebildet wird, **gekennzeichnet durch** ein Modulationsintervall ($\Delta t$) in einem Bereich von 1 s bis 20 s, und **gekennzeichnet durch** eine Pulsdauer ($\Delta t_{Puls}$) in einem Bereich von 1 ms bis 10 ms.

2. Verfahren nach Anspruch 1, **dadurch gekennzeichnet, dass** die Pulse der zu analysierenden Stoffgemische zeitlich und räumlich voneinander getrennt der Trenneinrichtung zugeführt werden.

3. Verfahren nach einem der Ansprüche 1 oder 2, **dadurch gekennzeichnet, dass** die jeweilige eindeutige binäre Sequenz aus $2^n$ Elementen besteht, mit $0 \leq n \leq \infty$, vorzugsweise mit $5 \leq n \leq 128$, besonders bevorzugt mit $7 \leq n \leq 14$.

4. Verfahren nach einem der Ansprüche 1 bis 3, **gekennzeichnet durch** eine synchronisiert mit der Stoffgemischzuführung erfolgende Stofferfassung der Auswerteeinrichtung.

5. Verfahren nach einem der Ansprüche 1 bis 4, **dadurch gekennzeichnet, dass** die Auswerteeinrichtung mit einer Erfassungsdauer betrieben wird, die dem Modulationsintervall (Pulsintervalldauer $\Delta t$) oder einem ganzzahligen Bruchteil des Modulationsintervalls (Pulsintervalldauer $\Delta t$) entspricht.

6. Verfahren nach Anspruch 4 oder Anspruch 5, **dadurch gekennzeichnet, dass** die seitens der Auswerteeinrichtung erfassten Stoffe mit der jeweiligen eindeutigen binären Sequenz der Pulse des zu analysierenden Stoffgemischs mathematisch dekonvoliert werden, vorzugsweise durch eine zweidimensionale mathematische Dekonvolution.

7. Verfahren nach Anspruch 6, **dadurch gekennzeichnet, dass** im Rahmen der Dekonvolution die von der Auswerteeinrichtung erfassten Stoffe einer Hadamard-Transformation mit der jeweiligen eindeutigen binären Sequenz unterzogen werden, aus dem Ergebnis der Hadamard-Transformation die Konzentrationsverteilungen der von der Auswerteeinrichtung erfassten Stoffe bestimmt werden und die Konzentrationen der einzelnen von der Auswerteeinrichtung erfassten Stoffe bestimmt werden, vorzugsweise durch Lösung eines von den Konzentrationsverteilungen, den Konzentrationen der einzelnen von der Auswerteeinrichtung erfassten Stoffe und der von der Auswerteeinrichtung erfassten Stoffe gebildeten linearen Gleichungssystems nach den Konzentrationen der einzelnen von der Auswerteeinrichtung erfassten Stoffe.

8. Verfahren nach einem der Ansprüche 1 bis 7, **dadurch gekennzeichnet, dass** die Trenneinrichtung chromatographische und/oder elektrophoretische Trennverfahren nutzt, vorzugsweise ein Gaschromatograph oder ein überkritischer Flüssigchromatograph ist.

9. Verfahren nach einem der Ansprüche 1 bis 8, **dadurch gekennzeichnet, dass** die Auswerteeinrichtung wenigstens einen Detektor, vorzugsweise wenigstens einen spektroskopischen und/oder spektrometrischen Detektor umfasst.

**10.** Verfahren nach einem der Ansprüche 1 bis 9, **dadurch gekennzeichnet, dass** es zur Durchführung einer Hochdurchsatzanalyse eingesetzt wird.

## Claims

**1.** Method for analysing a plurality of substance mixtures, in particular complex chemical and/or biochemical substance mixtures, wherein multiple substance mixtures for analysis are fed to a separating device, the substances in the substance mixture for analysis are separated from each other by the separating device by chemically and/or physically effected transport, the substances that have been separated from each other are detected by an evaluation device, and the multiple substance mixtures for analysis are fed to the separating device in pulses of a binary sequence unique to each, **characterised in that** the binary sequence unique to each is produced from a sequence generated with a binary random generator **characterised by** a modulation interval ($\Delta t$) in a range from 1 s to 20 s, and **characterised by** a pulse duration ($\Delta t_{Pulse}$) in a range from 1 ms to 10 ms.

**2.** Method according to claim 1, **characterised in that** the pulses of the substance mixtures for analysis are fed to the separating device temporally and spatially separated from each other.

**3.** Method according to claim 1 or 2, **characterised in that** the unique binary sequence is formed from a sequence that consists of $2^n$ elements, with $0 \leq n \leq \infty$, preferably with $5 \leq n \leq 128$, particularly preferably with $7 \leq n \leq 14$.

**4.** Method according to any one of claims 1 to 3, **characterised by** a substance detection performed by the evaluation device, which detection is synchronised with the substance mixture feed.

**5.** Method according to any one of claims 1 to 4, **characterised in that** the evaluation device is operated with a detection period that corresponds to the modulation interval (pulse interval duration $\Delta t$) or an integral fraction of the modulation interval (pulse interval duration $\Delta t$).

**6.** Method according to claim 4 or claim 5, **characterised in that** the substances detected by the evaluation device are deconvoluted mathematically with the unique binary sequence of the respective pulse of the substance mixture for analysis, preferably by two-dimensional mathematical deconvolution.

**7.** Method according to claim 6, **characterised in that** in the course of the deconvolution the substances detected by the evaluation device are subjected to a Hadamard transform with the respective unique binary sequence, the concentration distributions of the substances detected by the evaluation device are determined from the result of the Hadamard transform, and the concentrations of the individual substances detected by the evaluation device are determined, preferably by solving a linear equation system constructed from the concentration distributions, the concentrations of the individual substances detected by the evaluation device, and the substances detected by the evaluation device according to the concentrations of the substances detected by the evaluation device.

**8.** Method according to any one of claims 1 to 7, **characterised in that** the the separating device uses chromatographic and/or electrophoretic separating methods, preferably a gas chromatograph or a supercritical fluid chromatograph.

**9.** Method according to any one of claims 1 to 8, **characterised in that** the evaluation device comprises at least one detector, preferably at least one spectroscopic and/or spectrometric detector.

**10.** Method according to any one of claims 1 to 9, **characterised in that** it is used to carry out high throughput analysis.

## Revendications

**1.** Procédé d'analyse de plusieurs mélanges de substances, en particulier de mélanges complexes de substances chimiques et/ou biochimiques, dans lequel plusieurs mélanges de substances à analyser sont acheminés à un dispositif de séparation, les substances du mélange de substances à analyser sont séparées les unes des autres au niveau du dispositif de séparation par transport occasionné de manière chimique et/ou physique, les substances séparées les unes des autres sont détectées au niveau d'un dispositif d'évaluation et les plusieurs substances à analyser sont acheminées vers le mélange de substances du dispositif de séparation avec des impulsions d'une séquence binaire univoque respective, **caractérisé en ce que** la séquence binaire univoque respective est constituée d'une séquence générée au moyen d'un générateur aléatoire binaire, **caractérisé par** un intervalle de modulation ($\Delta t$) dans une plage de 1 s à 20 s, et **caractérisé par** une durée d'impulsion ($\Delta t_{Puls}$) dans une plage de 1 ms à 10 ms.

2. Procédé selon la revendication 1, **caractérisé en ce que** les impulsions du mélanges de substances à analyser sont communiquées séparément les unes des autres dans le temps et dans l'espace au dispositif de séparation.

3. Procédé selon une des revendications 1 ou 2, **caractérisé en ce que** la séquence binaire univoque respective est composée de $2^n$ éléments, sachant que $0 \leq n \leq \infty$, de préférence avec $5 \leq n \leq 128$, très préférentiellement avec $7 \leq n \leq 14$.

4. Procédé selon une des revendications 1 à 3, **caractérisé par** une détection de substances réalisée par le dispositif d'évaluation en synchronisation avec l'acheminement de mélanges de substances.

5. Procédé selon une des revendications 1 à 4, **caractérisé en ce que** le dispositif d'évaluation fonctionne avec une durée de détection qui équivaut à l'intervalle de modulation (durée de l'intervalle d'impulsion $\Delta t$) ou à une fraction en nombre entier de l'intervalle de modulation (durée de l'intervalle d'impulsion $\Delta t$).

6. Procédé selon la revendication 4 ou la revendication 5, **caractérisé en ce que** les substances détectées au niveau du dispositif d'évaluation sont déconvoluées mathématiquement avec la séquence binaire univoque respective des impulsions du mélange de substances à analyser, de préférence par une déconvolution mathématique bidimensionnelle.

7. Procédé selon la revendication 6, **caractérisé en ce que**, dans le cadre de la déconvolution, les substances détectées par le dispositif d'évaluation sont soumises à une transformation Hadamard avec la séquence binaire univoque respective, que, à partir du résultat de la transformation Hadamard, les répartitions de concentration des substances détectées par le dispositif d'évaluation sont définies et les concentrations des substances distinctes détectées par le dispositif d'évaluation sont définies, de préférence par dissolution d'un système d'équation linéaire constitué par les répartitions des concentrations, les concentrations des substances distinctes détectées par le dispositif d'évaluation et des substances détectées par le dispositif d'évaluation d'après les concentrations des substances distinctes détectées par le dispositif d'évaluation.

8. Procédé selon une des revendications 1 à 7, **caractérisé en ce que** le dispositif de séparation utilise des procédés de séparation chromatographiques et/ou électrophorétiques, de préférence un chromatographe à gaz ou un chromatographe à liquide sur-critique.

9. Procédé selon une des revendications 1 à 8, **caractérisé en ce que** le dispositif d'évaluation comprend au moins un détecteur, de préférence au moins un détecteur spectroscopique et/ou spectrométrique.

10. Procédé selon une des revendications 1 à 9, **caractérisé en ce qu'**il est utilisé pour réaliser une analyse de haut débit.

Chem. Reaktor

cf-SSL-MP-Injektor
Detektor

Injektor

fs-Säule

Verstärker

Modulationssequenz

GC Steuerung

Datenerfassung

Computer

Fig. 1

kontinuierliche Probeninjektion

cf-SSL-MP-Injektor
Detektor

Injektor

fs-Säule

Spektrometer

Verstärker

Modulationssequenz

GC Steuerung

Datenerfassung

Computer

Fig. 2

Druckventil →       ← Split-Ventil

Probenkapillare

inerter Glaseinsatz

Heizkartuschen

beheizter Block

Probenverdampfungsraum

Injektionsnadel

Fig. 3

Fig. 4a

Fig. 4b

Fig. 4c

Splitausgal
Probenport
Ventil
Ventil
Probenkapillaren
inerte Glaseinsätze
beheizter Block
Injektionsnadel

Fig. 5

Fig. 6a

Injektionskanal

( 30.37 )

NPT 1/16"
45 mm
NPT 1/16"
53 mm

( 6 )

( 1 )

NPT 1/16"

Ø6

Multiportblock

NPT 1/16"
10 mm

( 53 )

( 3 )

Gaszuleitung für Ventilanschluss

( TRUE R0.50 )

( 50 )

( 70 )

( 23 )

Bohrung für
Temperaturkontrolle

( 20 )

( 15 )

Bohrung für Heizkartusche

( 26.97 )

( 17° )

( Ø6 ⏀ 15 )

( 50 )

( 6.50 )

Ø1

( 6 )

NPT 1/16"

Ø1

Ø10 ⏀ 15

TRUE R0.50

Ø30.37

Ø6.50 ⏀ 50

Fig. 6b

Fig. 6c

Ventile  Ventile

Tieftemperaturdüsen

Fokussierkammer  Modulationskammer

Kontinuierlicher Probenfluss

Hochtemperaturdüsen

Ventile  Ventile

## Fig. 7

$A_1 \quad A_2 \ A_3 \ A_4 \ A_5 \quad A_6 \quad A_7 A_8 \ A_9 \ A_{10} A_{11} A_{12} A_{13}$

## Fig. 11

0.0  5.0  10.0  15.0  20.0  25.0  30.0  35.0  40.0  45.0

**[min]**

## Fig. 12

Fig. 8

Fig. 9

Fig. 10

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040144918 A1

**In der Beschreibung aufgeführte Nicht-Patentliteratur**

- **LAURGEAU et al.** Simultaneous Analysis of Two or More samples on the same Chromatographic Column. *Chromatographia,* 1979, vol. 12, 160-164